# EUROPÄISCHE PATENTANMELDUNG

(11) **EP 0 896 970 A1**
(43) Veröffentlichungstag der Anmeldung: **17.02.1999**
(21) Anmeldenummer: 98113483.6
(22) Anmeldetag: 20.07.1998
(51) Int. Cl.: C08G 18/08, G11B 5/702

(54) **Lösungsmittelfrei herstellbare Polyurethane und ihre Verwendung als Bindemittel für magnetische Aufzeichnungsträger**

(30) Priorität: 12.08.1997 DE 19734893
(71) Anmelder: EMTEC Magnetics GmbH, 67059 Ludwigshafen (DE)
(72) Erfinder: Weingart, Franz, 69181 Leimen (DE); Hackl, Christa, 49152 Bad Essen (DE); Krech, Rüdiger, 49356 Diepholz (DE); Bauer, Stephan, Dr., 67126 Hochdorf-Assenheim (DE); Kohl, Albert, 67229 Laumersheim (DE); Kress, Ria, Dr., 67063 Ludwigshafen (DE); Schelble, Josef, Dr., 86441 Zusmarshausen (DE); Bohrmann, Hans-Günther, 67067 Ludwigshafen (DE)

(57) **Zusammenfassung**

Die Erfindung betrifft ein thermoplastisches, saure Gruppen enthaltendes, in Tetrahydrofuran lösliches, isocyanatgruppenfreies Polyurethan mit einem Molekulargewicht zwischen 15000 und 70000, aufgebaut aus
A) 1 mol eines Polyols mit einem Molekulargewicht zwischen 400 und 4000,
B) 0,3 bis 9 mol eines Gemisches aus
   B1) gegebenenfalls einem Diol mit 2 bis 18 Kohlenstoffatomen und
   B2) 0,03 bis 0,4 mol eines mindestens eine saure Gruppe aufweisenden Diols,
C) 0 bis 1 mol eines Polyols mit 3 bis 18 Kohlenstoffatomen und mindestens 3 OH-Gruppen,
D) 1,25 bis 13 mol eines Diisocyanats mit 6 bis 30 Kohlenstoffatomen und
E) 0 bis 1 mol eines primären oder sekundären Aminoalkohols mit 2 bis 16 Kohlenstoffatomen,
wobei das Molverhältnis der in der Summe der Komponenten A, B, C und E vorhandenen OH- und gegebenenfalls NH-Gruppen zu den NCO-Gruppen der Komponente D 0,98 bis 1,4 beträgt, das durch Umsetzung der obigen Komponenten in der Schmelze erhältlich und insbesondere als Bindemittel für magnetische Aufzeichnungsträger brauchbar ist.

## Beschreibung

Die Erfindung betrifft thermoplastische, isocyanatgruppenfreie, in Tetrahydrofuran lösliche und saure Gruppen enthaltende Polyurethane, ihre Herstellung in der Schmelze, ihre Verwendung als Bindemittel und magnetische Aufzeichnungsträger, die sie als Bindemittel in der magnetisierbaren Schicht enthalten.

An magnetische Aufzeichnungsträger werden hinsichtlich der Aufzeichnung, der Wiedergabe und auch der Alterungsbeständigkeit immer höhere Anforderungen gestellt. Um diesen Anforderungen gerecht zu werden, kommt dem Bindemittel eine zunehmende Bedeutung zu.

So wird zur Verbesserung der magnetischen Eigenschaften eine erhöhte Packungsdichte des magnetischen Materials in der Schicht angestrebt, was eine Verringerung des Bindemittelanteils in der Schicht zur Folge hat. Ebenso wird versucht, ein verbessertes Signal-Rausch-Verhältnis durch die Verwendung immer feinteiligerer magnetischer Materialien mit ausgeprägter Nadelform zu erzielen. Diese Materialien werden zudem zur Verringerung von Alterserscheinungen sehr oft oberflächenmodifiziert. Bedingt durch solche Maßnahmen wird sowohl die Aufteilung der Pigmente im Dispergierprozess als auch das Erreichen einer guten Dispersionsstabilität erheblich erschwert. Insgesamt müssen die Magnetschichten aber sehr flexibel sein, eine hohe Elastizität aufweisen und eine hohe Reißfestigkeit besitzen. Daneben wird, zur Vermeidung von Pegeleinbrüchen, zunehmend eine Verringerung der Reibungswerte und eine Erhöhung der Abrieb- und Verschleißfestigkeit gefordert. Des weiteren gilt, dass die mechanische Stabilität der Magnetschicht insbesondere bei hoher Temperatur und hoher Luft feuchte ebenfalls gewährleistet sein muss.

Es ist bekannt, dass Magnetschichten, die starken mechanischen Beanspruchungen unterworfen werden, vorteilhaft Polyurethanelastomere als Bindemittel enthalten. Besonders bewährt haben sich Polyesterurethane, wie sie in der DE-B 1 106 959, DE-B 2 753 694, EP-A 0 069 955 oder in der US-A 2,899,411 beschrieben sind.

Diese Bindemittel sind jedoch im Zusammenhang mit den oben beschriebenen Forderungen und Maßnahmen nicht verwendbar. In vielen Fällen wird die Pigmentbenetzung und -dispergierung ungünstig beeinflußt, so daß eventuelle Versinterungen beim Mahlprozeß nur ungenügend zerteilt werden oder eine Agglomeration der Pigmentteilchen nicht ausreichend verhindert wird, was zu schlechten Magnetwerten und daraus resultierend zu schlechten Bandeigenschaften in puncto Elektroakustik und Videodaten führt. Aus diesem Grund werden zur Erleichterung des Dispergiervorgangs niedermolekulare Dispergiermittel in kleineren Mengen hinzugefügt, Diese Dispergiermittel zeigen zwar ein gutes Aufteilungsverhalten, stabilisieren jedoch die Dispersion nur schlecht. Daher werden oft noch höhermolekulare Dispergierharze als zusätzliche Komponente verwendet. In DE-A 30 26 357 oder DE 31 37 293 wird beispielsweise der Zusatz von Polyesterharzen, die SO₃M-Gruppen aufweisen, beschrieben.

Diese Verfahren zur Verbesserung des Dispergiervorgangs weisen jedoch Nachteile auf. So können niedermolekulare Dispergiermittel bei ungünstigen Klimabedingungen, wie hohe Temperatur und/oder hohe Luftfeuchtigkeit leicht ausschwitzen. Dadurch kommt es in Aufnahme- bzw. Wiedergabegeräten zu Ablagerungen an allen bandberührenden Teilen, besonders am Kopf, wodurch Pegeleinbrüche verursacht werden. Außerdem steigt die Reibung (Adhäsion) stark an, wodurch es zu einem Stillstand des Bandes, dem Blocken, kommen kann. Beim Einsatz von Dispergierharzen kann es andererseits zu Verträglichkeitsproblemen in der Dispersion kommen. Diese Stoffe sind oft auch keine Filmbildner und bewirken daher ebenfalls ein Blocken. Weiterhin sind die mechanischen Eigenschaften dieser Dispergierharze oft nicht an das Eigenschaftsniveau des als Hauptbindemittel verwendete Polyurethans angepasst. Eine Verschlechterung der mechanischen Eigenschaften bedeutet immer auch eine Erhöhung des Abriebs.

Die Verwendung von niedermolekularen Dispergierhilfsmitteln führt - da die Menge sich nach der Belegung pro m² Pigmentoberfläche richtet - zu einer Gesamtmenge an Dispergiermitteln, die für die Eigenschaften des Bandes inakzeptabel ist. Da diese Dispergiermittel polare Gruppen enthalten, nimmt die Hydrophilie der Schicht stark zu, und damit - speziell im Feuchtklima - auch folgende Effekte, wie Quellen der Schicht, Ausschwitzen der Dispergier- und Gleitmittel und Veränderungen im mechanischen Eigenschaftsniveau durch Veränderungen der "Weichmachereffekte".

Als Folge dessen wird die Blockierneigung des Bandes erhöht und die Verschmutzung des Kopfes gefördert.

Zur Verbesserung der Dispergiereigenschaften des Polyurethanbindemittels selbst wurde schon frühzeitig der Vorschlag gemacht, polare Gruppen in das Bindemittel einzubauen. Diese polaren Gruppen können prinzipiell über jede Komponente, die bei der Herstellung des Polyurethans verwendet wird, eingeführt werden. Am häufigsten ist die Verwendung von Polyestern mit polaren Gruppen (u. a. DE-A 28 33 845). Der Einbau von Diolen, die zusätzlich polare Gruppen tragen, wird beispielsweise in der JP-A 57 092 421, der DE-OS 38 14 536 oder der EP-A 193 084 beschrieben. Der nachträgliche Einbau der polaren Gruppen durch S_{N}-Reaktion an den OH-Endgruppen der Polyurethane wird in der JP-A 57 092 422 offenbart. Die bisher beschriebenen, polare Gruppen tragenden Polyurethane zeigen zwar ein verbessertes Dispergierverhalten, die Verbesserung ist aber für viele Ansprüche noch nicht ausreichend.

Ein weiterer Nachteil aller beschriebenen Polyurethane ist, dass die erforderliche Elastizität häufig mit einer zu geringen Härte und einer Tendenz zur Oberflächenklebrigkeit einhergeht. Es ist daher Stand der Technik, entsprechende Polyurethane mit anderen Bindemitteln zu kombinieren. Vorgeschlagene Bindemittel-Kombinationen sind z. B. Mischungen aus Polyurethanen mit Phenoxyharzen, mit Vinylidenchlorid-Acrylnitril-Copolymerisaten, mit Vinylchlorid-Acrylsäureester-Copolymerisaten, mit Polycarbonaten oder Polyestern. Beispielhaft sei die DE-A 32 39 160 erwähnt. Diese Bindemittelkombinationen führen zwar zu einer Verbesserung der mechanischen Eigenschaften der Magnetschicht, das Dispergierverhalten einer derartigen Kombination ist aber verringert. Dadurch wirken sich die besonderen Eigenschaften der magnetischen Materialien nur unbefriedigend aus. Dies zeigt sich durch einen niedrigeren Richtfaktor, eine geringere Remanenz und damit durch eine geringere Höhen- und Tiefenempfindlichkeit sowie eine unbefriedigendere Aussteuerbarkeit der resultierenden Aufzeichnungsträger.

Eine Möglichkeit, die Härte der Polyurethane zu erhöhen, ist die Erhöhung der Urethan- und Harnstoffgruppenkonzentration. Derartige Maßnahmen führen jedoch sehr schnell zu Produkten, die in gängigen Lösungsmitteln, wie z. B. MEK, Toluol oder THF, unlöslich werden (EP-A 143 337). Gemäß der DE-A 31 37 293 werden zur Erhöhung der Härte nichtmagnetische Teilchen zugemischt.

Diese beschriebenen Maßnahmen reichen jedoch nicht aus, die angestiegenen Anforderungen an das Bindemittelsystem gleichzeitig zu erfüllen. Zudem ist zum Erreichen einzener Effekte oft eine Kombination der Polyurethane mit anderen Bindemitteln zwingend notwendig.

Nachteilig bei der Verwendung hochmolekularer Bindemittel ist der hohe Lösungsmittelbedarf, die relativ langen Dispergierzeiten und/oder die nötige 2-Phasendispergierung. Außerdem wirken sich auch in diesen Bindemittelsystemen die besonderen Eigenschaften der magnetischen Materialien nur unbefriedigend aus. Dies zeigt sich durch den niedrigen Richtfaktor, eine geringe Remanenz und damit eine geringe Höhen- und Tiefenempfindlichkeit sowie eine unbefriedigende Aussteuerbarkeit der resultierenden Aufzeichnungsträger.

Eine wesentliche Verbesserung des Dispergierverhaltens konnte mit niedermolekularen, OH-gruppenhaltigen Polyurethanen, wie sie in der EP 99 533 beschrieben sind, erreicht werden. Aber auch diese Maßnahmen reichen nicht aus, die immer feinteiligeren Pigmente zu dispergieren und die immer weiter gestiegenen Anforderungen an die magnetischen Aufzeichnungsträger bezüglich Mechanik und magnetische Werte zu erfüllen.

Die Verwendung eines thermoplastischen Polyurethans, das isocyanatgruppenfrei, sulfonatgruppenhaltig, verzweigt, in Tetrahydrofuran löslich und mit OH-Gruppen-haltigen Harnstoffgruppen an den Kettenenden ausgestattet ist, mit einem Molekulargewicht von 4000 bis 30000 oder 30000 bis 200000 als Bindemittel für ferromagnetische Pigmente magnetischer Aufzeichnungsträger ist in der EP 490 233 bzw. US 5,266,408 offenbart. Die Polyurethane sind aus einem Polyol mit einem Molekulargewicht von 400 bis 4000 bzw. 400 bis 10000, einem Diol mit 2 bis 18 Kohlenstoffatomen, einem sulfonatgruppenhaltigen Diol, einer geringen Menge eines Triols mit 3 bis 25 Kohlenstoffatomen, einem Diisocyanat mit 6 bis 30 Kohlenstoffatomen und einem primären oder sekundären Aminoalkohol mit 2 bis 16 Kohlenstoffatomen aufgebaut, wobei die Isocyanatgruppen im Unterschuss gegenüber der Summe der eingesetzten OH- und NH-Gruppen verwendet werden. Nachteilig an dem Verfahren ist die Herstellung der Polyurethane in Lösungsmitteln. Eine Substanzpolyaddition ohne Lösungsmittel wird wegen erwarteter Gelbildung durch die verwendeten Triole und Amine für unmöglich gehalten. Eine weiter verbesserte Dispergierung der immer feinteiligeren Pigmente erscheint zudem wünschenswert.

Der Erfindung liegt daher die Aufgabe zugrunde, verbesserte, lösungsmittelfrei herstellbare Bindemittel, insbesondere für extrem feinteilige ferromagnetische Pigmente mit einer BET > 40 m²g⁻¹ bereitzustellen.

Es wurde nun gefunden, daß diese gestellte Aufgabe gelöst wird, wenn als Bindemittel des feinverteilten magnetischen Materials ein thermoplastisches, saure Gruppen enthaltendes, in Tetrahydrofuran lösliches, isocyanatgruppenfreies Polyurethan mit einem Molekulargewicht zwischen 15000 und 70000 eingesetzt wird, welches aufgebaut ist aus
A) 1 mol eines Polyols mit einem Molekulargewicht zwischen 400 und 4000,
B) 0,3 bis 9 mol eines Gemisches aus
   B1) gegebenenfalls einem Diol mit 2 bis 18 Kohlenstoffatomen und
   B2) 0,03 bis 0,4 mol eines mindestens eine saure Grippe aufweisenden Diols,
C) 0 bis 1 mol eines Polyols mit 3 bis 25 Kohlenstoffatomen und mindestens 3 OH-Gruppen,
D) 1,25 bis 13 mol eines Diisocyanats mit 6 bis 30 Kohlenstoffatomen und
E) 0 bis 1 mol eines primären oder sekundären Aminoalkohols mit 2 bis 16 Kohlenstoffatomen,
wobei das Molverhältnis der in der Summe der Komponenten A, B, C und E enthaltenen OH- und gegebenenfalls NH-Gruppen zu den NCO-Gruppen der Komponente D 0,98 bis 1,4 beträgt, und wobei das Polyurethan durch Umsetzung der Komponenten in der Schmelze herstellbar ist. Die Herstellung in der Schmelze ist vorteilhaft, da sie lösemittelfrei und ohne Gelbildung erfolgt. Die auf Basis der erfindungsgemäßen Polyurethane hergestellten Bindemittel haben verbesserte Dispergiereigenschaften, die Magnetpigmentdispersionen zeigen bessere Fließeigenschaften und auch die magnetischen Eigenschaften der erfindungsgemäßen magnetischen Aufzeichnungsträger sind verbessert.

Das Molekulargewicht der erfindungsgemäßen Polyurethane liegt im Bereich von 15000 bis 70000, entsprechend einem K-Wert nach H. Fikentscher (Cellulosechemie 13 (1932), S. 58 ff.) (1%ig in Dimethylformamid) im Bereich von 32 bis 60. Die erfindungsgemäß als Bindemittel in den Magnetschichten verwandten Polyurethane haben im allgemeinen eine Härte nach DIN 53157 von 20 bis 130 S. Sie weisen ferner einen E-Modul (Elastizitätsmodul gemäß DIN 53457) im Bereich von 50 bis 2500 Nmm⁻², eine Reißdehnung > 74 % (DIN 53455) und eine Reißfestigkeit zwischen 20 und 70 Nmm⁻² (DIN 53455). Der Erweichungspunkt liegt zwischen 80 und 180 °C. Besonders günstig ist eine Pendelhärte (DIN 53157) von 25 bis 125 S, ein E-Modul von 55 bis 2000 Nmm⁻², eine Reißdehnung von 85 bis 350 % und eine Reißfestigkeit von 25 bis 50 Nmm⁻².

Zur Herstellung der Polyurethane wird als Komponente A ein Polyol, insbesondere ein Polydiol mit einem Molekulargewicht von 400 bis 4000, bevorzugt von 700 bis 2500, eingesetzt. Hierzu eignen sich die bekannten Polyesterole, Polyetherole, Polycarbonatdiole und Polycaprolactondiole.

Die Polyesterole sind zweckmäßigerweise überwiegend lineare Polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher Weise durch Veresterung von aliphatischen oder aromatischen Dicarbonsäuren mit 4 bis 15 C-Atomen, vorzugsweise 4 bis 6 C-Atomen, mit Glykolen, bevorzugt Glykolen mit 2 bis 25 C-Atomen oder durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure, Bernsteinsäure und Phthalsäuren einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Geeignete aromatische Dicarbonsäuren sind Terephthalsäure, Isophthalsäure oder Mischungen aus diesen mit anderen Dicarbonsäuren, z. B. Diphensäure, Sebacinsäure, Bernsteinsäure und Adipinsäure. Beispiele für geeignete Glykole sind Diethylenglykol, 1,5-Pentandiol, 1,10-Decandiol und 2,2,4-Trimethylpentandiol-1,5. Vorzugsweise verwendet werden 1,2-Ethandiol, 1,4-Butandiol, 1,6-Hexandiol und 2,2-Dimethylpropandiol-1,3; 1,4-Dimethylolcyclohexan, 1,6-Dimethylolcyclohexan und 1,4-Diethanolcyclohexan; und ethoxilierte/propoxilierte Produkte des 2,2-Bis-(4-hydroxyphenylen)-propan (Bisphenol A). Je nach den gewünschten Eigenschaften der Polyurethane können die Polyole alleine oder als Mischung in verschiedenen Mengenverhältnissen verwendet werden. Als Lactone für die Herstellung der Polyesterole eignen sich z. B. α,α-Dimethyl-β-propiolacton, γ-Butyrolacton und vorzugsweise ε-Caprolacton.

Besonders bevorzugt werden als Komponente A Polyesterole, aufgebaut aus 1,4-Dimethylolcyclohexan und/oder 1,6-Dimethylolcyclohexan und einem Gemisch von Terephthalsäure und Isophthalsäure mit Adipinsäure, Diphensäure, Sebacinsäure und Bernsteinsäure verwendet.

Die Polyetherole sind im wesentlichen lineare, endständige Hydroxylgruppen aufweisende Substanzen, die Etherbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran, oder durch Umsetzung von einem oder mehreren Alkylenoxiden mit 2 bis 4 Kohlenstoffatomen im Alkylenrest mit einem Startermolekül, das zwei aktive Wasserstoffatome im Alkylenrest gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die Alkylenoxide können einzeln, alternierend nacheinander oder als Mischung verwendet werden. Als Startermoleküle kommen beispielsweise in Betracht: Wasser; Glykole, wie Ethylenglykol, Propylenglykol, 1,4-Butandiol und 1,6-Hexandiol; Amine, wie Ethylendiamin, Hexamethylendiamin und 4,4'-Diamino-diphenylmethan und Aminoalkohole, wie Ethanolamin. Ebenso wie die Polyesterole können auch die Polyetherole allein oder in Mischungen verwendet werden.

Die Polycarbonatdiole sind ebenso wie ihre Herstellung in der US-A 4,131,731 beschrieben, sie sind im allgemeinen auf Hexandiol-1,6-Basis aufgebaut.

Als Baustein B1) werden gegebenenfalls Diole mit 2 bis 18 Kohlenstoffatomen, vorzugsweise 2 bis 10 C-Atomen, eingesetzt, so z. B. 1,2-Ethandiol, 1,3-Propandiol, 1,4-Butandiol, 1,6-Hexandiol, 1,5-Pentandiol, 1,10-Decandiol, 2-Methyl-1,3-propandiol, 2-Methyl-2-butyl-1,3-propandiol, 2,2-Dimethyl-1,3-propandiol, 2,2-Dimethyl-1,4-butandiol, 2-Ethyl-2-butyl-1,3-propandiol, Hydroxivalinsäureneopentylglykolester, Diethylenglykol, Triethylenglykol und Methyldiethanolamin. Die Diole können einzeln oder als Gemische verwendet werden. In einer Menge bis zu 5 Gew.-%, bezogen auf die Gesamtmenge an B1, können auch Diamine mit 2 bis 15 Kohlenstoffatomen wie Ethylendiamin, 1,6-Hexamethylendiamin, 4,9-Dioxododecan-1,12-diamin oder 4,4'Diaminodiphenylmethan eingesetzt werden. Es hat sich als vorteilhaft erwiesen, die dabei entstehenden Harnstoffgruppen in die Polymerkette einzubauen. Die Harnstoffgruppen am Kettenende sind hierbei von untergeordneter Bedeutung. In gleicher Weise können als Bausteine B1) die genannten Diole auch teilweise durch Wasser ersetzt werden.

Die als Komponente B2) verwendeten Diole enthalten mindestens eine saure Gruppe, wie eine Carbonsäure-, Phosphonsäure, Phosphorsäure- oder Sulfonsäure-Gruppe. Als carbonsäurehaltiges Diol eignet sich beispielsweise 2,2-Bis(hydroxymethyl)propionsäure. Bevorzugt enthält die Diolkomponente B2) mindestens eine SO₃M-Gruppe, wobei M für ein Wasserstoffatom, ein Alkalimetallion, z. B. Li, Na oder K, oder einen Ammoniumrest, wie NH₄, steht. Dabei können sowohl langkettige Diole mit SO₃M-Substituenten, die an das Kettenende gebunden sind, als auch kurzkettige verzweigte Diole, bei denen die SO₃M-Gruppen in der abzweigenden Kette, vorzugsweise an deren Ende sitzen, verwendet werden.

Geeignete Diole B2) sind beispielsweise Verbindungen der Formel (I), wie sie in der DE 34 07 562 beschrieben sind,

R¹CH₂O-(C₂H₄O)ₙ(C₃H₇O)ₘCH₂-CHR³-CH₂-SO₃M (I)

wobei
- R¹: = HO-CH₂-CH(OH)-, R²-C(CH₂OH)₂-,
- R²: = CH₃-, C₂H₅-, C₃H₇-,
- R³: = H- oder CH₃-,
- X: = H-, Alkali- oder Ammoniumion,
- n: = 0 bis 20,
- m: = 0 bis 20
- n+m: = 1 bis 20, wobei das Diol insgesamt bis zu 65 C-Atome aufweisen kann,
ist, sowie Diole der Formel (II), wie sie teilweise in EP-A 414 102 beschrieben sind: 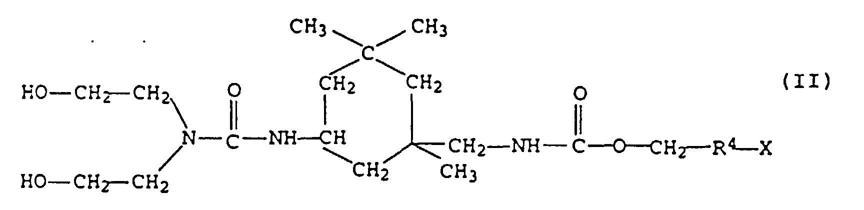 in welcher
- R⁴: einen geradkettigen oder verzweigten oder cyclischen Rest mit 1 bis 10 Kohlenstoffatomen, der gegebenenfalls mit Heteroatomen substituiert sein kann, bedeutet oder 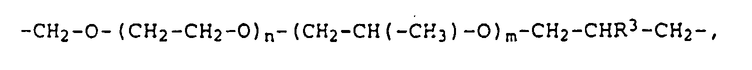 bedeutet,
worin R³ = H oder CH₃, n = 0 bis 100, m = 0 bis 50 und n+m ≧ 1, bedeutet, und
- X: = SO₃M, worin M für H, Li, Na, K oder Ammonium steht.

Die Verbindung gemäß Formel (I), in der R¹ für R²-C(CH₂OH)₂-, R² für Ethyl. R³ für H, X für Natrium und m+n für 17 bis 20 stehen, wobei n > m ist, wird als Komponente B2) besonders bevorzugt und ist unter dem Warenzeichen Tegomer DS 3117 (Fa. Goldschmidt) kommerziell erhältlich.

Das Verhältnis der Komponenten B1) und B2) zueinander wird zweckmäßigerweise entsprechend der spezifischen Oberfläche des eingesetzten magnetischen Materials gewählt. Im Allgemeinen liegt das Verhältnis B1:B2 im Bereich von 4 bis 100.

Die gegebenenfalls vorhandenen Polyole (Komponente C) sind Verbindungen mit 3 bis 18, vorzugsweise 3 bis 6 C-Atomen. Beispiele für brauchbare Polyole sind Glycerin oder Trimethylolpropan. Geeignet sind auch niedermolekulare Umsetzungsprodukte von z. B. Trimethylolpropan mit Ethylenoxid und/oder Propylenoxid. Als Polyole lassen sich beispielsweise Erythrit, Pentaerythrit und Sorbit einsetzen. Das Vorhandensein von Polyolen bei der Polyaddition führt zu einer Verzweigung des Endprodukts, was sich, sofern keine örtliche Vernetzung auftritt, positiv auf die mechanischen Eigenschaften des Polyurethans auswirkt. Überraschenderweise erfolgt bei der Herstellung der Polyurethane in der Schmelze aber keine Gelbildung.

Zur Bildung der Polyurethane werden die unter A) und B) genannten sowie gegebenenfalls die unter C) und E) gerannten Komponenten mit aliphatischen, cycloaliphatischen oder aromatischen Diisocyanaten mit 6 bis 30 Kohlenstoffatomen (Komponente D) umgesetzt. Hierfür eignen sich Verbindungen wie Toluylen-2,4-diisocyanat, Toluylen-2,6-diisocyanat, meta- bzw. para-Tetramethylxyloldiisocyanat, meta-Phenylendiisocyanat, 4-Chlor-1,3-phenylendiisocyanat, 1,5-Naphthylendiisocyanat, 1,6-Hexamethylendiisocyanat, 1,5-Hexamethylendiisocyanat, 1,4-Cyclohexylendiisocyanat und 1,5-Tetrahydronaphthylendiisocyanat, 4,4'-Diphenylmethandiisocyanat, Dicyclohexylmethandiisocyanat, Isophorondiisocyanat oder Gemische davon. Besonders bevorzugt wird 4,4'-Diphenylmethandiisocyanat verwendet.

Gegebenenfalls können durch Verwendung der Komponente E) Harnstoffgruppen und bei Zugabe von E) nach Beginn der Reaktion der Komponenten A), B) und C) mit D), OH-Endgruppen in das erfindungsgemäße Polyurethan eingeführt werden. Die als Komponente E) eingesetzten Aminoalkohole mit 2 bis 16, vorzugsweise 3 bis 6 C-Atomen, sind unter anderem Monoethanolamin, Methylisopropanolamin, Ethylisopropanolamin, Methylethanolamin, 3-Aminopropanol, 1-Ethylaminobutanol-2, 4-Methyl-4-aminopentanol-2, N-(2-Hydroxyethyl)anilin. Diolamine sind besonders geeignet, da durch ihre Anlagerung am Kettenende die OH-Zahl der Polymeren verdoppelt wird. Als besonders günstig haben sich Diethanolamin und Diisopropanolamin erwiesen.

Das Verhältnis der Komponenten A) bis E) zueinander kann von 1,25 bis 13 mol Diisocyanat je mol Polydiol bei Verwendung von 0,3 bis 9, vorzugsweise 1 bis 6 mol des Diols der Komponente B) und 0 bzw. 0,1 bis 1 mol, vorzugsweise 0 bzw. 0,2 bis 0,4 mol des Polyols der Komponente C) variiert werden, wobei die Menge des verwendeten Diols teilweise von dem Molekulargewicht des verwendeten Polydiols abhängt. Die Menge des angewandten Isocyanats wird so bemessen, dass das Molverhältnis der OH- und gegebenenfalls NH-Gruppen in der Summe der Komponenten A), B), C) und E) zu den NCO-Gruppen der Komponenten D) im Bereich von 0,98 bis 1,4, vorzugsweise 1,01 bis 1,25 liegt, so dass am Ende der Reaktion praktisch kein freies, nicht umgesetztes Isocyanat, aber freie, nicht umgesetzte Hydroxylgruppen verbleiben. Die Komponente E) kann dabei entweder zusammen mit den Diolen zur Reaktion gebracht werden oder vorzugsweise erst nach Beginn der Reaktion der Diole mit den Isocyanatgruppen zugegeben werden.

Als geeignete Katalysatoren zur Herstellung der Polyurethane und für die Vernetzungsreaktion seien beispielhaft genannt: tertiäre Amine, wie Triethylamin, Triethylendiamin, N-Methyl-pyridin und N-Methyl-morpholin; Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommenden Katalysators. Im Allgemeinen hat es sich als zweckmäßig erwiesen, 0,005 bis 0,3 Gewichtsteile für jeweils 100 Gewichtsteile, vorzugsweise 0,01 bis 0,1 Gewichtsteile für jeweils 100 Gewichtsteile Polyurethan zu verwenden.

Die so aufgebauten, thermoplastischen Polyurethane werden lösemittelfrei in der Schmelze hergestellt. Zu diesem Zweck können die Komponenten in üblichen Apparaturen, z. B. Misch-Knetreaktoren aufgeschmolzen, vermischt und zur Reaktion gebracht werden. Besonders bevorzugt erfolgt die Herstellung der erfindungsgemäßem Polyurethane in einem Extruder. Es können übliche Extruder verwendet werden, die mit einer oder zwei - gleichsinnig oder gegensinnig drehenden - Schnecken ausgerüstet sind. Vorzugsweise verfügen sie über zusätzliche Knetelemente. Brauchbare Extruder sind beispielsweise die Extruder der ZKS-Serie von Werner u. Pfleiderer.

Die einzelnen Komponenten können dem Extruder entweder geschmolzen oder in fester Form, beispielsweise als Schuppen, zugeführt werden. Die Bausteine A), B), C) und E) können sowohl außerhalb des Extruders als auch erst im Extruder vermischt werden. Die Zugabe der Komponente E) kann gegebenenfalls sowohl bereits zu Anfang als auch zu einem späteren Zeitpunkt der Reaktion erfolgen. Die Komponente D) wird vorzugsweise über einen separaten Zulauf dosiert. Wenn verschiedene Isocyanatkomponenten verwendet werden, können diese gegebenenfalls vorgemischt werden. Die Art und Anzahl der Zuläufe sowie die Verweilzeit im Extruder sind von den jeweils erforderlichen Reaktionsbedingungen abhängig, d. h. von der Reaktivität der Komponenten, der Reaktionswärme etc. Die Reaktionstemperatur liegt im Allgemeinen im Bereich von 120 bis 200 °C, die zur Anwendung kommende Temperatur bestimmt sich aus den Schmelzpunkten sowie der Löslichkeit der Komponenten und der Temperaturstabilität der Komponenten und des Polyurethanprodukts. Die Temperatur kann während der Reaktion variiert werden, z. B. kann sie von einem Schuss des Extruders zum anderen in zweckmäßiger Weise gesteigert werden. Das aus dem Extruder ausgetragene Produkt wird in üblicher Weise gewonnen und zerkleinert, z. B. unter Wasser granuliert und getrocknet. Gegebenenfalls kann sich eine Temperung bei 50 bis 80 °C anschließen. Während der Lagerung bei Zimmertemperatur oder gegebenenfalls während der Temperung reagieren eventuell noch vorhandene geringe Mengen Isocyanatgruppen ab, so dass in jedem Fall ein isocyanatgruppenfreies Polyurethan resultiert.

Das erfindungsgemäß hergestellte, thermoplastische Polyurethan ist in den üblichen polaren Lösungsmitteln, wie Ethern, z. B. Tetrahydrofuran oder Dioxan, Ketonen, z. B. Methylethylketon oder Cyclohexanon, Estern, z. B. Ethylacetat, oder Kohlenwasserstoffen, z. B. Alkanen oder Aromaten, oder Mischungen dieser Lösungsmittel, löslich. Überraschenderweise hat sich gezeigt, dass die erfindungsgemäßen Polyurethane im Vergleich zu solchen, die aus den gleichen Komponenten in Lösung (vgl. EP 490 223) hergestellt werden, vorteilhafte Eigenschaften besitzen. Sie sind besonders brauchbar zur Dispergierung von Magnetpigmenten, insbesondere besonders feinteiligen Magnetpigmenten, wie sie für hochdichte, magnetische Aufzeichnungssysteme, z. B. im Videobereich, im Audiobereich oder im Datenbereich verwendet werden. Die erhaltenen Magnetdispersionen besitzen bessere Fließeigenschaften und die daraus hergestellten Magnetschichten besitzen höhere Glanzwerte. Darüber hinaus erfüllen sie auch die eingangs genannten Anforderungen an Bindemittel für Magnetschichten, nämlich gute Dispergierwirkung und schnelle Dispergierung, gute Stabilisierung der Dispersion, geringer Lösungsmittelbedarf bei der Herstellung der Dispersion, guter Verlauf beim Vergießen der Dispersion, hohe Pigmentfüllung der Schicht, gute Richtbarkeit der Magnetnadeln und gute mechanische Eigenschaften der Magnetschicht, auch bei hohen Temperaturen. Gegenstand der Erfindung sind daher auch magnetische Aufzeichnungsmaterialien, welche die erfindungsgemäßen Polyurethane als Bindemittel in der Magnetschicht enthalten.

Die erfindungsgemäßen Polyurethane sind insbesondere als Bindemittel brauchbar. Sie lassen sich als alleinige Bindemittel für die Herstellung von Magnetschichten verwenden, es ist jedoch für spezielle Anwendungszwecke bei magnetischen Aufzeichnungsträgern gemäß der Erfindung vorteilhaft, mindestens eine weitere Bindemittelkomponente in Mengen von weniger als 70 Gewichtsteilen, vorzugsweise weniger als 40 Gewichtsteilen, bezogen auf die resultierende Gesamtbindemittelmenge, zuzusetzen.

Die gegebenenfalls im Bindemittelgemisch als Cobindemittel enthaltenen physikalisch trocknenden Bindemittel sind bekannt. Es handelt sich hierbei unter anderem um ein Polyvinylformal-Bindemittel, welches durch Hydrolyse eines Polymerisats eines Vinylesters und anschließende Umsetzung des Vinylalkohol-Polymers mit Formaldehyd hergestellt wird. Die Polyvinylformale haben zweckmäßigerweise einen Vinylformalgruppengehalt von mindestens 65 Gew.-% und insbesondere mindestens 80 Gew.-%. Besonders geeignete Polyvinylformale haben einen Gehalt an Vinylalkohol-Gruppen von 5 bis 13 Gew.-%, einen Gehalt an Vinylformal-Gruppen von 80 bis 88 Gew.-%, ein spezifisches Gewicht von ca. 1,2 und eine Viskosität von 50 bis 120 mPas gemessen bei 20 °C mit einer Lösung von 5 g Polyvinylformal in 100 ml Phenol-Toluol (1:1). In gleicher Weise geeignet sind neben dem Polyvinylformal Vinylchloriddiol-mono- oder -di(meth)acrylat-Copolymerisate, die sich z. B. in an sich bekannter Weise durch Lösungscopolymerisation oder Suspensionscopolymerisation von Vinylchlorid und dem Diolmono(meth)acrylat oder -di(meth)- acrylat herstellen lassen. Das hierfür zum Einsatz gelangende Diolmono- oder -diacrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.-% 1,2-Propandiol besteht. Die Copolymerisate haben zweckmäßigerweise einen Vinylchloridgehalt von 50 bis 95 Gew.-% und einen Diolacrylat oder -methacrylat-Gehalt von 5 bis 50 Gew.-%. Besonders geeignete Copolymerisate besitzen vorzugsweise einen Gehalt von 70 bis 90 Gew.-% Vinylchlorid und 10 bis 30 Gew.-% Diolmonoacrylat bzw. Diolmonomethacrylat. Eine 15%ige Lösung besonders geeigneter Copolymerisate wie der Vinylchlorid-Propandiolmonoacrylat-Copolymerisate in einem Gemisch aus gleichen Volumenteilen von Tetrahydrofuran und Dioxan weist bei 25 °C eine Viskosität von etwa 30 mPas auf. Der K-Wert der besonders geeigneten Produkte liegt zwischen 30 und 50, vorzugsweise bei etwa 40.

Außerdem lassen sich als Cobindemittel vorteilhaft Phenoxyharze mit wiederkehrenden Einheiten der Formel 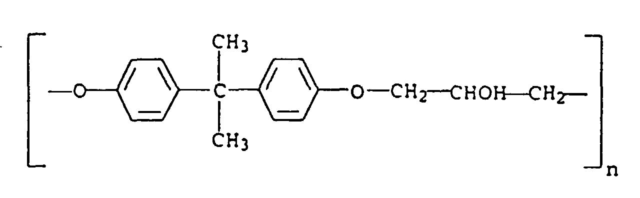 in der n annähernd gleich 100 ist, einsetzen. Es handelt sich hierbei um Polymere, wie sie unter den Handelsbezeichnungen Epikote® der Firma Shell Chemical Co. oder unter der Bezeichnung Epoxidharz PKHH® der Union Carbide Corporation bekannt sind.

In gleicher Weise eignen sich Celluloseester-Bindemittel zur Verwendung in dem bezeichneten Bindemittelgemisch. Dies sind Veresterungsprodukte der Cellulose mit Salpetersäure oder mit Carbonsäuren mit 1 bis 4 Kohlenstoffatomen, wie z. B. Celluloseacetat, Cellulosetriacetat, Celluloseacetopropionat, Celluloseacetobutyrat.

Die Verwendung einer nicht dispergieraktiven Cobindemittel-Komponente, wie z. B. VAGH®, Pioloform® oder PKHH® etc., führt - da der Anteil an dispergieraktivem Polyurethan reduziert wird - zu einer eventuellen Verschlechterung der Dispergierwirkung bzw. der Stabilität der Dispersion.

Als vorteilhaft hat sich nun die Verwendung von z. B. Sulfonatgruppen aufweisenden Vinylchlorid-Copolymeren z. B. gemäß der US 4,748,084 als Cobindemittel erwiesen, die als Handelsprodukt MR 110® der Fa. Nippon Zeon erhältlich sind.

Die Verwendung von 0 bis 30 % eines Dispergierharzes gemäß der DE-OS 19516784 und der DE-OS 4446383 ist erfindungsgemäß ebenfalls möglich. Diese Polyurethanharnstoffacrylate weisen, entsprechend ihrer stufenweisen Herstellung, eine organophile, polymere Hauptkette auf, die sich an einem ihrer Enden mehrfach verzweigt, wobei die äußersten Zweige saure Gruppen tragen.

Die weitere Verarbeitung des Bindemittelgemisches mit magnetischen Materialien und Hilfsstoffen zu magnetischen Aufzeichnungsträgern erfolgt in an sich bekannter Weise.

Als anisotrope magnetische Materialien können die an sich bekannten Pigmente verwendet werden, die die Eigenschaften der resultierenden Magnetschichten wesentlich beeinflussen, wie z. B. Gamma-Eisen(III)oxid, feinteiliger Magnetit, ferromagnetisches undotiertes oder dotiertes Chromdioxid, kobaltmodifiziertes Gamma-Eisen(III)oxid, Bariumferrite oder ferromagnetische Metallteilchen. Bevorzugt sind nadelförmiges, insbesondere dendritfreies, kobaltmodifiziertes oder unmodifiziertes Gamma-Eisen(III)oxid sowie ferromagnetisches Chromdioxid und Metallpigment. Die Verwendung von Metallpigment ist besonders bevorzugt. Die Teilchengröße beträgt im allgemeinen 0,05 bis 1 µm, bevorzugt ist der Bereich von 0,08 bis 0,5 µm. Die spezifische Oberfläche beträgt im Allgemeinen mindestens 40 m²/g (BET-Methode) und liegt vorzugsweise im Bereich von 50 bis 200 m²/g.

Die erfindungsgemäßen Bindemittel können in Rezepturen ohne zusätzliche Verwendung von niedermolekularem Dispergiermittel eingesetzt werden. Es ist aber auch möglich, in untergeordnetem Maße, im Vergleich zum Stand der Technik geringe Mengen an Dispergiermittel zuzugeben, wie z. B. Lecithin, Zn-Oleat oder Zn-Stearat.

Ferner enthalten die Magnetschichten in kleinen Mengen Zusätze wie Gleitmittel, aber auch Füllstoffe, die bei der Dispergierung der magnetischen Materialien oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente sowie Fettsäureester, wie Butylstearat, oder Wachse, Siliconöle, Ruß usw. Die Menge der Zusätze ist die an sich übliche, sie liegt im allgemeinen unter 10 Gew.-%, bezogen auf die Magnetschicht.

Das Mengenverhältnis von magnetischem Material zu Bindemittel in den erfindungsgemäßen Aufzeichnungsmaterialien liegt im Bereich von 1 bis 10 und insbesondere 3 bis 6 Gewichtsteilen magnetisches Material auf ein Gewichtsteil des Bindemittelgemisches. Es ist ein besonderer Vorteil, dass aufgrund des vorzüglichen Pigmentbindevermögens der speziellen Polyurethane hohe Magnetmaterialkonzentrationen in den Magnetschichten, z. B. bis zu 90 Gew.-%, bezogen auf das Gesamtgewicht der Magnetschicht, möglich sind, ohne dass die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im Allgemeinen in Stärken von 4 bis 200 µm und insbesondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z. B. einer Topfkugelmühle oder einer Rührwerksmühle, aus dem magnetischen Material und einer Lösung der Bindemittel unter Zusatz von Gleitmitteln und eventuell geringen Mengen Dispergiermitteln hergestellte Magnetpigmentdispersion (Komponente 1) gegebenenfalls nach dem Zumischen eines Polyisocyanatvernetzers (Komponente 2) filtriert und mit einer üblichen Beschichtungsmaschine, z. B. mittels eines Linealgießers, auf den nichtmagnetischen Träger aufgetragen. In der Regel erfolgt eine magnetische Ausrichtung, bevor die flüssige Beschichtungsmischung auf dem Träger getrocknet wird; letzteres geschieht zweckmäßigerweise in 10 bis 200 s bei Temperaturen von 50 bis 90 °C. Die Magnetschichten können auf üblichen Maschinen mittels Hindurchführen zwischen geheizten und polierten Walzen, gegebenenfalls bei Anwendung von Druck und Temperaturen von 25 bis 100 °C, vorzugsweise 60 bis 90 °C, geglättet und verdichtet werden. Dabei hat es sich bei vernetzenden Bindemitteln als sehr vorteilhaft erwiesen, die Kalandrierung vorzunehmen bevor die Vernetzung abgeschlossen ist, da die OH-Polymeren in unvernetztem Zustand sehr thermoplastisch sind, ohne hierbei zu verkleben. Die Dicke der Magnetschicht beträgt im allgemeinen 0,5 bis 20 µm, vorzugsweise 1 bis 10 µm, Im Falle der Herstellung von Magnetbändern werden die beschichteten Folien in der Längsrichtung in den üblichen, meist nach Zoll festgelegten Breiten geschnitten.

Zur Vernetzung kann der Dispersion ein Polyisocyanat (Komponente 2) zugesetzt werden. Dies erfolgt im Allgemeinen vor dem Auftragen auf den Träger. Für die Vernetzung kann eine Vielzahl organischer Di-, Tri- oder Polyisocyanate oder Isocyanatpräpolymere bis zu einem Molekulargewicht von 10000, vorzugsweise zwischen 500 und 3000, verwendet werden. Bevorzugt sind Polyisocyanate bzw. Isocyanatpräpolymere, die mehr als zwei NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die Menge an zugesetzter Polyisocyanatkomponente kann je nach den an das Aufzeichnungsmaterial gestellten Anforderungen, bezogen auf die OH-Gruppen des zu vernetzenden Polyurethanbindemittels, im Unterschuss von bis zu 70 %, vorzugsweise bis zu 50 % oder im Überschuss von bis zu 100 %, vorzugsweise von bis zu 50 %, erfolgen.

Sofern die gegebenenfalls verwendeten Cobindemittel gegenüber Isocyanat reaktive Gruppen tragen (z. B. -OH), können sie bei Verwendung von Vernetzern mit in das Netzwerk eingebaut werden.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

### Beispiele

### 1. Synthese der Polymere

Für die Herstellung der beschriebenen Produkte wird ein Reaktionsextruder Typ 20.34 der Fa. Leistritz mit einem Schneckendurchnesser D = 34 mm und einer Schneckenlänge von 35 D verwendet. Die Alkoholkomponenten werden in dem in Tabelle 2 angegebenen Molverhältnis in einer Vorlage bei einer Temperatur von 120 °C gemischt und mit Tetrabutylorthotitanat als Katalysator (50 ppm bez. auf Alkoholkomponenten) versetzt. Die Isocyanatkomponente MDI = 4,4'-Diphenylmethandiisocyanat wird separat bei einer Temperatur von 65 °C vorgelegt. Die Dosierung der Rohstoffe erfolgt mittels Kolbenpumpe geschlossen in das erste Gehäuse bei einer Schneckendrehzahl von 280 min⁻¹, wobei die Rohstoffkomponenten zunächst in einem Schneckenmischteil intensiv vermischt und im nachfolgenden Förderteil zur Reaktion gebracht werden. Durch die Dosierströme wird das Verhältnis NCO/OH eingestellt. Das Temperaturprofil der Extrudergehäuse wird dabei beginnend bei 200 °C in Fließrichtung abfallend gewählt (bis ca. 160 °C). Nach Verlassen des Extruders fällt die hochviskose Schmelze über einen Heißabschlag in einen Wasserstrom. In einem Zentrifugaltrockner wird das Granulat von oberflächlich anhaftendem Wasser befreit. Anschließend werden die Produkte bei 80 °C 15 h lang getempert.

Die als Polydiol verwendeten Polyesterole sind in Tabelle 1 angegeben.

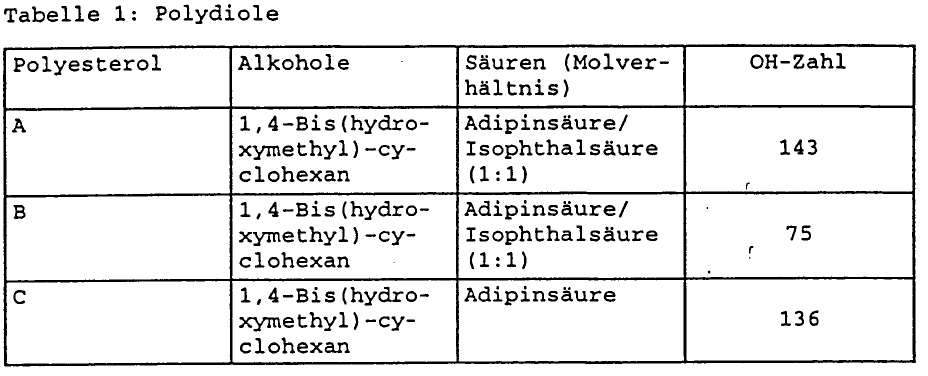

Das gewichtsmittlere Molekulargewicht (Mw) wird mittels Gelpermeationschromatographie (Elutionsmittel: THF, Polystyrol-Standards) bestimmt. Die K-Werte werden in 1 %-iger Lösung in Dimethylformamid nach H. Fikentscher, Cellulose Chemie 8(3), S. 58-64 (1932), gemessen. Die Ergebnisse sind für die Polymere I bis VII in Tabelle 2 angegeben.

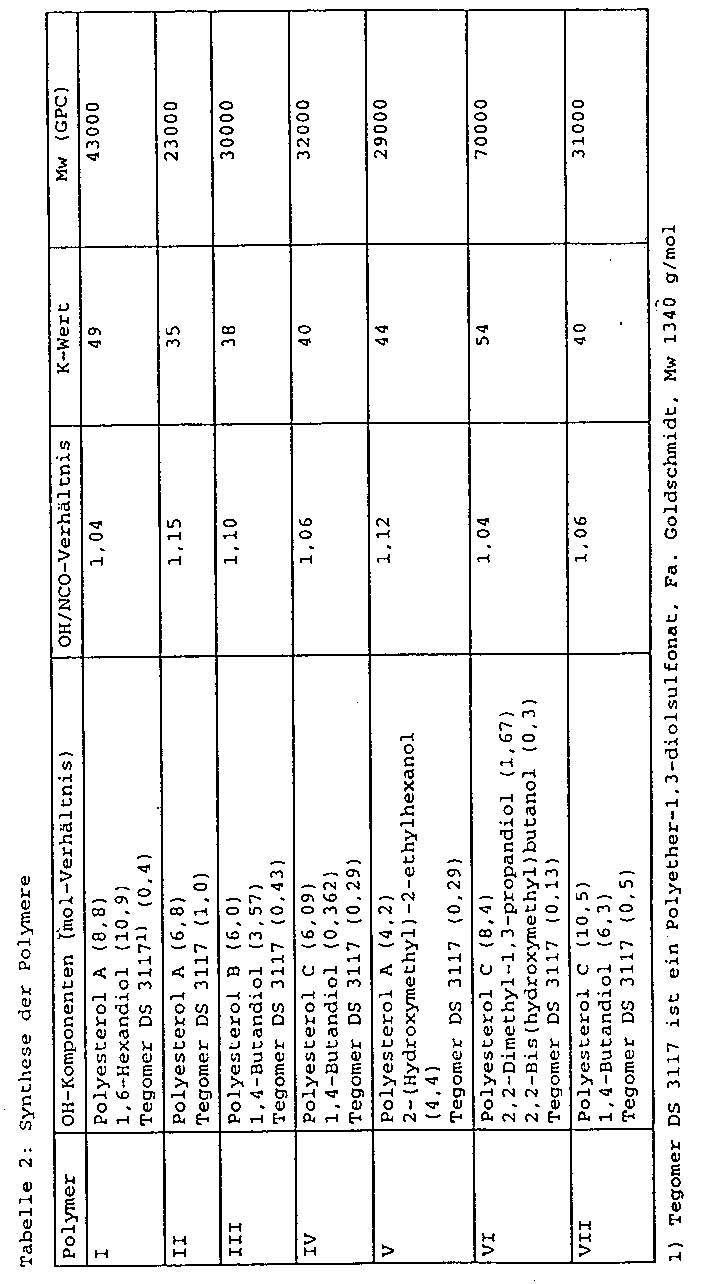

### 2. Synthese von Vergleichspolyurethanen in Lösung

### Polymer I*

Polyesterol A (6,1 mol), 1,6-Hexandiol (7,6 mol) und Tegomer DS 3117 (0,3 mol) werden in 15,7%-igem THF gelöst, 50 ppm Dibutylzinndilaurat und 4,4'-Diphenylmethandiisocyanat (14 mol) zugegeben und bei 60 °C gerührt. Der NCO-Gehalt der Reaktionslösung wird kontinuierlich verfolgt. Bei Erreichen einer NCO-Konzentration von 0,088 Gew.-% wird Bis(hydroxymethyl)amin (0,47 mol) zugesetzt. Das resultierende Produkt besitzt einen K-Wert von 41 und ein Molekulargewicht von 33000.

### Polymer VII*

Es wird verfahren wie bei der Synthese von Polymer I*. Statt Polyesterol A werden 18,5 mol Polyesterol C eingesetzt, statt 1,6-Hexandiol 11 mol 1,4-Butandiol, 0,9 mol Tegomer DS 3117 und 30,4 mol 4,4'-Diphenylmethandiisocyanat. Das Produkt weist einen K-Wert von 39 und ein Molekulargewicht (Mw, GPC) von 29000 auf.

### Polymer I**

Die Synthese von Polymer I* wird derart modifiziert, dass nur 13,46 mol 4,4'-Diphenylmethandiisocyanat zugesetzt werden. Die Reaktion wird bei 60 °C so lange fortgeführt, bis der NCO-Gehalt < 0,01 % beträgt. Die Zugabe von Bis(hydroxyethyl)amin entfällt. Das erhaltene Produkt weist einen K-Wert von 43 und ein Mw von 44000 auf.

### Polymer VII**

Die Synthese wird analog der Synthese von Polymer VII* durchgeführt. Die Menge an 4,4'-Diphenylmethandiisocyanat wird auf 29,2 mol reduziert. Die Reaktion wird so lange fortgeführt, bis der NCO-Gehalt < 0,01 % beträgt. Das Produkt weist einen K-Wert von 42 und ein Molekulargewicht von 36000 auf.

### 3. Dispergierung von Metallpigment - Beurteilung von Glanz und Fließverhalten

In eine 250 ml Glasflasche werden 200 g Keramikkugeln (Durchmesser 1,5 mm), 42,5 g Reineisenpigment (Spez. Oberfläche 59 m²/g), 18 g einer 20 %-igen Lösung des Polymers in THF und 113 g THF eingewogen. Die Mischung wird auf einem Red-Devil Paint Shaker 12 h geschüttelt (Phase I). Der Mischung werden weitere 18 g der Polymerlösung sowie 15 g THF zugegeben, und die Mischung eine weitere Stunde dispergiert (Phase II). Zur Prüfung der Stabilität der Dispersion werden die Keramikkugeln durch Filtration entfernt, und die Mischung 24 h auf einem Walzenrollenstuhl gelagert. Nach Phase I und Phase II sowie nach der Lagerung wird eine Probe der Dispersion mit einem Handrakel (100µm) auf eine PET-Folie aufgetragen, bei Zimmertemperatur getrocknet und der Glanz dieser Beschichtung bestimmt. Hierfür wird ein Reflektometer der Fa. Dr. Lange verwendet, Einfallswinkel und Meßwinkel 60 °. Zusätzlich wird das Fließverhalten der Dispersionen und die Oberflächengüte beurteilt. Gute und stabile Dispersionen zeichnen sich dadurch aus, dass der Glanzwert möglichst groß ist, dass der Glanz durch die Lagerung nicht beeinträchtigt wird, dass die Dispersion gut fließfähig ist, eine niedrige Fließgrenze aufweist, sowie nach der Beschichtung eine glatte Oberfläche ohne Agglomerate ergibt.

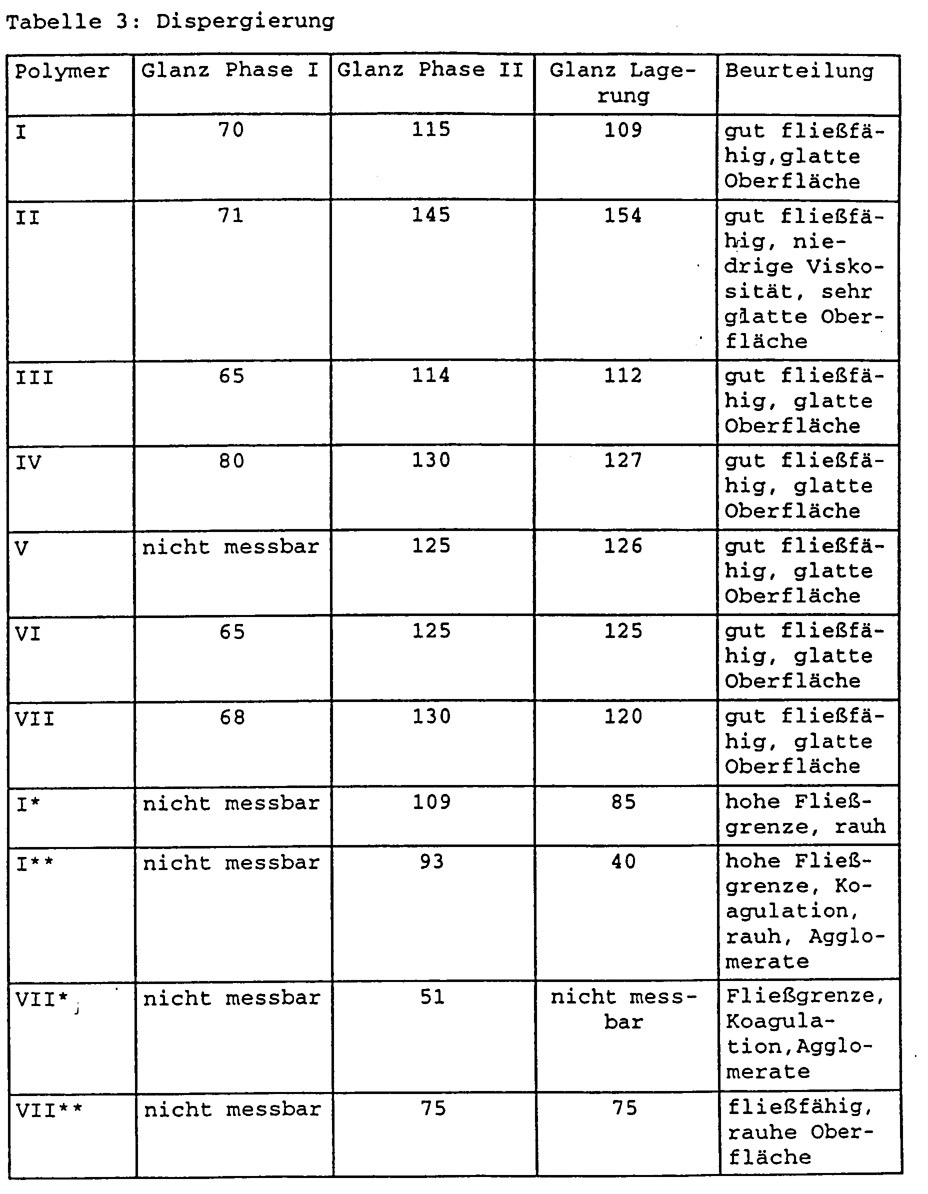

### 4. Dispergierung im technischen Maßstab - Beurteilung der Oberflächeneigenschaften sowie der magnetischen und mechanischen Eigenschaften der Aufzeichnungsträger

Eine Mischung aus 100 Gew.-Teilen eines ferromagnetischen Metallpigments (H_{c} = 117 kA/m; SSA = 51 m²/g; durchschnittliche Partikellänge 170 nm, mittlerer Partikeldurchmesser 25 nm), 10 Gew.-Teilen α-Aluminiumoxid (durchschnittlicher Partikeldurchmesser 320 nm), 2 Gew.-Teilen Ruß (BET = 35 m²/g; Primärteilchengröße = 50 nm), 11 Gew.-Teilen des erfindungsgemäßen Polymers II, 7 Gew.-Teilen eines VC-Copolymers mit polaren Ankergruppen (MR 110 der Firma Nippon Zeon), 2,5 Gew.-Teilen Stearinsäure, 15 Gew.-Teilen Tetrahydrofuran und 15 Gew. -Teilen Dioxan wurden in einem Batch-Kneter (IKA Hochleistungskneter Typ HKD 10, Firma IKA-Maschinenbau, Staufen) 2 Stunden geknetet (Feststoffgehalt der Knetphase: 81,5 Gew.-%).

Die Knetmasse wurde anschließend portionsweise in einem Dissolver unter starkem Rühren mit einem Gemisch aus 145 Gew.-Teilen THF und 145 Gew.-Teilen Dioxan versetzt und dann 9 Stunden mit einer Rührwerksmühle dispergiert. Zu der Dispersion wurden anschließend unter starkem Rühren 1 Gewichtsteil Butylstearat, 5,2 Gew.-Teile einer 50 Gew.-%igen Lösung des Umsetzungsprodukts von 3 Mol Toluylendiisocyanat mit 1 Mol Trimethylolpropan in THF sowie portionsweise ein Gemisch aus 40 Gew.-Teilen THF und 40 Gew.-Teilen Dioxan gegeben. Nach Filtration durch ein Filter mit einer Porenweite von 2 µm wurde eine homogene, feinteilige, absetzstabile und flokkulatfreie beschichtungsfähige Dispersion erhalten (Feststoffgehalt der Dispersion: 25,3 %).

Die Dispersion wurde auf eine rückbeschichtete Polyethylenterephthalat-Folie mit einer Trockenschichtdicke von 3 µm aufgetragen. Vor dem Trocknen wurde die beschichtete Bahn zur Ausrichtung der ferromagnetischen Pigmente durch eine Richtstrecke, bestehend aus einer Spule mit einer Feldstärke von 200 kA/m, hindurchgeführt. Nach dem Trocknen bei 80 °C wurde die Folienbahn in einem Stahl/ Stahl-Kalander mit 6 Spalten bei 85 °C und einem Druck von 200 kg/cm satiniert und anschließend in 1/2 Zoll breite Videobänder geschnitten.

### Vergleichsbeispiel

Es wurde wie oben beschrieben verfahren, jedoch wurde das erfindungsgemäße Polyurethan II gewichtsmäßig durch ein kommerzielles Polyurethan ohne Ankergruppen (Morthane CA 371, Firma Morton) ersetzt.

Die erhaltenen Meßergebnisse zeigt die Tabelle 4.

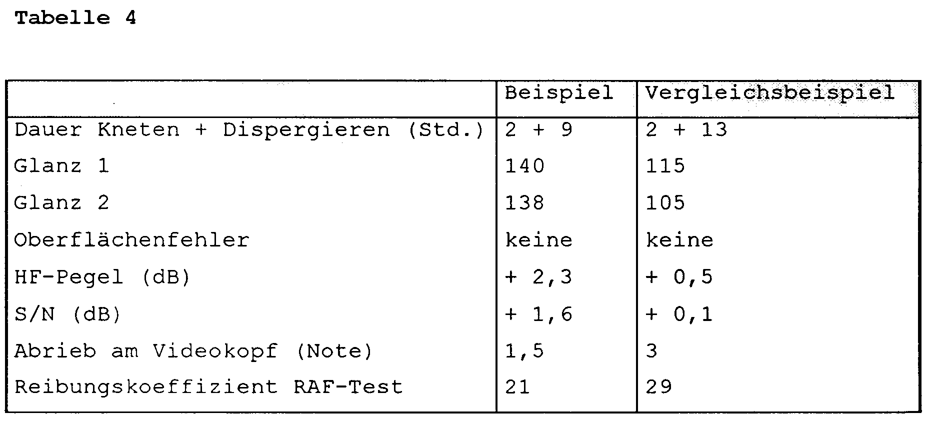

Die Meßwerte (Tabelle 4) bedeuten:

### Glanzmessung:

Es wird die Reflektion im 60°-Winkel an der unkalandrierten Schicht gemessen.
Glanz 1: Glanzwert unmittelbar nach Ende der Dispergierung
Glanz 2: Glanzwert nach 24 Stunden Rollbrett

Die Pigmentaufteilung ist um so besser, je höher der Glanzwert liegt.

### HF-Pegel:

Der Hochfrequenz-Pegel wurde in einem Betacam SP-Rekorder (System BVW 75, Firma Sony) gegen das Referenzband Sony RSB 01 SP gemessen. Das Band ist um so besser, je höher der HF-Pegel ist.

### S/N (Luminanz):

Das Luminanz-Signal wurde in einem Betacam SP-Rekorder (System BVW 75, Firma Sony) gegen das Referenzband Sony RSB 01 SP gemessen. Das Band ist um so besser, je höher der S/N-Wert ist.

### Reibungskoeffizient:

Der Reibungskoeffizient im RAF-Test wurde bei einer Probenlänge von 150 mm bei einer Meßstrecke von 100 mm bestimmt. Nach 15-minütiger Klimatisierung bei 40 °C und 80 % relativer Feuchte wurde das Bandstück auf eine Länge von 100 mm mit einer Kraft von 2 N und einer Geschwindigkeit von 20 mm/s über einen Stahlstift (Durchmesser 2,5 mm, Umschlingung 90°) hin- und hergezogen. Gemessen wurde der Reibungskoeffizient nach 100 Zyklen im o. g. Klima. Das Band ist in seinem Laufeigenschaften um so besser, je kleiner der Wert ist.

## Patentansprüche

1. Thermoplastisches, saure Gruppen enthaltendes, in Tetrahydrofuran lösliches, isocyanatgruppenfreies Polyurethan mit einem Molekulargewicht zwischen 15000 und 70000, aufgebaut aus
A) 1 mol eines Polyols mit einem Molekulargewicht zwischen 400 und 4000,
B) 0,3 bis 9 mol eines Gemisches aus
B1) gegebenenfalls einem Diol mit 2 bis 18 Kohlenstoffatomen und
B2) 0,03 bis 0,4 mol eines mindestens eine saure Gruppe aufweisenden Diols,
C) 0 bis 1 mol eines Polyols mit 3 bis 18 Kohlenstoffatomen und mindestens 3 OH-Gruppen,
D) 1,25 bis 13 mol eines Diisocyanats mit 6 bis 30 Kohlenstoffatomen und
E) 0 bis 1 mol eines primären oder sekundären Aminoalkohols mit 2 bis 16 Kohlenstoffatomen,
wobei das Molverhältnis der in der Summe der Komponenten A, B, C und E vorhandenen OH- und gegebenenfalls NH-Gruppen zu den NCO-Gruppen der Komponente D 0,98 bis 1,4 beträgt, erhältlich durch Umsetzung der obigen Komponenten in der Schmelze.

2. Polyurethan gemäß Anspruch 1, dadurch gekennzeichnet, dass die Komponente B2) ein Diol mit mindestens einer Carbonsäure-, Phosphorsäure-, Phosphonsäure- oder Sulfonsäure-Gruppe ist.

3. Polyurethan gemäß Anspruch 1, dadurch gekennzeichnet, dass die Komponente B2) ein Diol mit mindestens einer Sulfonsäure-Gruppe ist.

4. Polyurethan gemäß Anspruch 1, dadurch gekennzeichnet, dass die Komponente B2) eine Verbindung der Formel (I) ist:
R¹CH₂O-(C₂H₄O)ₙ(C₃H₇O)ₘCH₂-CHR³-CH₂-SO₃X (I)
wobei
R¹ = HO-CH₂-CH(OH)-, R²-C(CH₂OH)₂-,
R² = CH₃, C₂H₅, C₃H₇,
R³ = H oder CH₃,
X = H-, Alkali- oder Ammoniumion,
n = 0 bis 20,
m = 0 bis 20 und
n+m = 1 bis 20, wobei das Diol insgesamt bis zu 65 C-Atome aufweisen kann,
ist.

5. Polyurethan gemäß einem der Ansprüche 1 bis 5, dadurch gekennzeichnet, dass die Komponente B2) ein Diol der Formel (II) ist: 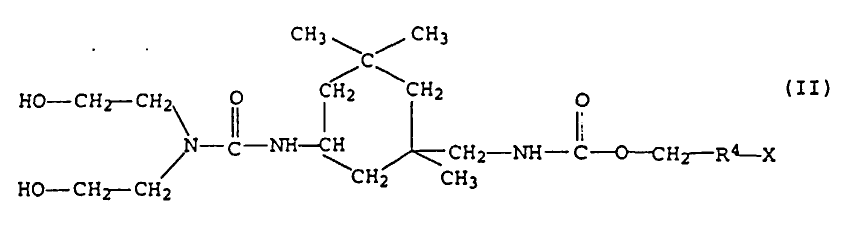 in welcher
R⁴ einen geradkettigen oder verzweigten oder cyclischen Rest mit 1 bis 10 Kohlenstoffatomen, der gegebenenfalls mit Heteroatomen substituiert sein kann, bedeutet oder für einen Rest der Formel
-CH₂-O-(CH₂-CH₂-O)ₙ-(CH₂-CH(CH₃)-O)ₘ-CH₂-CHR³-CH₂-,
steht, worin R³= H oder CH₃, n = 0 bis 100, m = 0 bis 50 und n+m ≧ 1, bedeutet,
und
X = -SO₃M,
worin M für H, Li, Na, K oder Ammonium steht,
darstellt.

6. Polyurethan gemäß einem der vorhergehenden Ansprüche, dadurch gekennzeichnet, dass als Komponente D) 4,4'-Diphenylmethandiisocyanat eingesetzt wird.

7. Polyurethan gemäß einem der vorhergehenden Ansprüche, dadurch gekennzeichnet, dass die Komponente B1 teilweise durch Diamine mit 2 bis 15 Kohlenstoffatomen ersetzt wird.

8. Polyurethan gemäß einem der vorhergehenden Ansprüche, dadurch gekennzeichnet, dass die Komponente B1 teilweise durch Wasser ersetzt wird.

9. Polyurethan gemäß einem der vorhergehenden Ansprüche, dadurch gekennzeichnet, dass der K-Wert der Polyurethane im Bereich von 32 bis 60 liegt.

10. Verfahren zur Herstellung von Polyurethanen gemäß Anspruch 1, dadurch gekennzeichnet, dass
A) 1 mol eines Polyols mit einem Molekulargewicht zwischen 400 und 4000,
B) 0,3 bis 9 mol eines Gemisches aus
B1) gegebenenfalls einem Diol mit 2 bis 18 Kohlenstoffatomen und
B2) 0,03 bis 0,4 mol eines mindestens eine saure Gruppe aufweisenden Diols,
C) 0 bis 1 mol eines Polyols mit 3 bis 18 Kohlenstoffatomen und mindestens 3 OH-Gruppen,
D) 1,25 bis 13 mol eines Diisocyanats mit 6 bis 30 Kohlenstoffatomen und
E) 0 bis 1 mol eines primären oder sekundären Aminoalkohols mit 2 bis 16 Kohlenstoffatomen
in der Schmelze umgesetzt werden.

11. Verfahren nach Anspruch 12, dadurch gekennzeichnet, dass die Komponenten im Extruder umgesetzt werden.

12. Magnetischer Aufzeichnungsträger, umfassend ein nichtmagnetisches Trägermaterial und mindestens eine haftfest darauf aufgebrachte Magnetschicht mit einem magnetischen Material, wobei die Magnetschicht mindestens ein thermoplastisches Polyurethan gemäß einem der Ansprüche 1 bis 9 enthält.

13. Magnetischer Aufzeichnungsträger, umfassend ein nichtmagnetisches Trägermaterial und mindestens eine haftfest darauf aufgebrachte Magnetschicht mit einem magnetischen Material, wobei die Magnetschicht mindestens ein thermoplastisches Polyurethan gemäß einem der Ansprüche 1 bis 9 enthält, welches mit einem Isocyanat vernetzt ist, das ausgewählt ist unter Di-, Tri- und Polyisocyanaten und Isocyanatpräpolymeren mit einem Molgewicht bis zu 10000.

14. Magnetischer Aufzeichnungsträger gemäß Anspruch 12 oder 13, dadurch gekennzeichnet, dass er das genannte Polyurethan als alleiniges Bindemittel enthält.

15. Verwendung eines Polyurethans gemäß einem der Ansprüche 1 bis 9 als Bindemittel.
